# EUROPEAN PATENT SPECIFICATION

(11) **EP 1 688 282 B1**
(45) Date of publication and mention of the grant of the patent: **27.02.2008**
(21) Application number: 05028596.4
(22) Date of filing: 28.12.2005
(51) Int. Cl.: B60G 15/06

(54) **Shock absorber**
Stoßdämpfer
Amortisseur de choc

(30) Priority: 08.02.2005 JP 2005031248
(43) Date of publication of application: 09.08.2006
(73) Proprietor: KAYABA INDUSTRY CO., LTD., Minato-Ku, Tokyo 105-6190 (JP); Toyota Jidosha Kabushiki Kaisha, Toyota-shi, Aichi-ken, 471-8571 (JP)
(72) Inventor: Horiba, Kazuyoshi, Minato-ku Tokyo 1056190 (JP); Morita, Yuji, Minato-ku Tokyo 1056190 (JP); Kojima, Shigeru, Minato-ku Tokyo 1056190 (JP); Moriwaki, Fumihiro c/o Toyota Jidosha K. K., Aichi-ken, 471-8571 (JP); Takeshita, Eiji c/o Toyota Jidosha K. K., Aichi-ken, 471-8571 (JP)
(74) Representative: Becker Kurig Straus

(56) References cited:
- DE-A1- 4 129 645
- DE-A1- 19 748 634
- DE-A1- 19 920 017
- DE-C1- 10 053 576
- US-B1- 6 341 678

## Description

### Background of the Invention

The invention relates to a shock absorber.

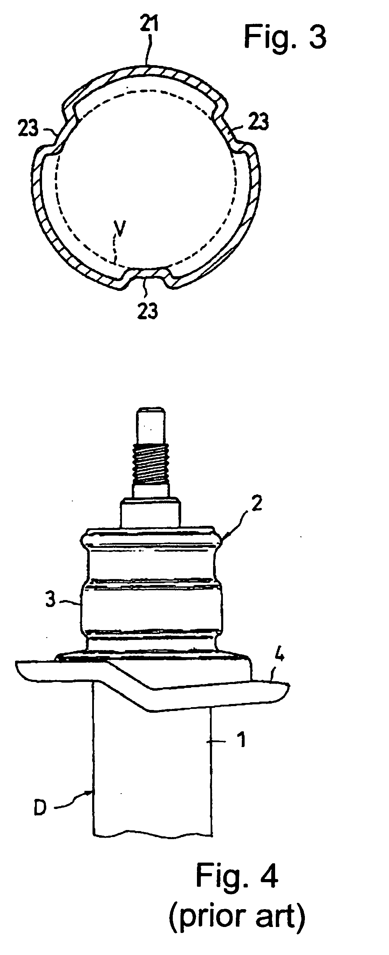

In a shock absorber that includes a suspension spring bearing, which bears the bottom end of a suspension spring supporting the weight of a vehicle, the shock absorber comprises, as shown in Fig. 4 for example, a shock absorber D configured in a multi-cylindrical-shape and a suspension spring bearing 2 attached on the periphery of an external cylinder 1 of the shock absorber D. The suspension spring bearing 2 is formed in the shape of a hat, and comprises a cylindrical main body 3 and a suspension spring bearing part 4 extended from the bottom end of the main body 3.

The suspension spring bearing 2 covers an end of external cylinder 1, and is fixed on the external cylinder 1 by applying roll swages on two places, i.e., at the upper and the bottom part, of the main body 3 on its entire periphery as is described, for example, in Japanese Patent Gazette (Tokkyo-kouhou) No. 3023958.

For fixing the suspension spring bearing 2 on the periphery 1 of the shock absorber configured in a multi-cylindrical-shape, it is harmless to apply roll swages at two locations, i*.*e*.*, at the upper part and the lower part of the main body 3 of the suspension spring bearing 2, because doing so does not distort a cylinder (not shown) located inside the external cylinder 1. However, when the same roll swages are applied to a shock absorber having a single cylinder, it may distort the cylinder and interfere with smooth vertical movement of a piston slidably inserted in the cylinder.

If the suspension spring bearing is fixed by welding instead of roll swaging, the welding may distort the cylinder, which may also interfere with smooth vertical movement of the piston.

In addition, unless the suspension spring bearing is fixed firmly on the cylinder, the suspension spring bearing may experience movement or vibration in a direction perpendicular to the long axis of the cylinder as the suspension spring compresses and bows sideways when the shock absorber is compressed under a load.

The crosswise movement or vibration of the suspension spring bearing generates a slight change in the force generated in the shock absorber as a whole, which includes the force generated by the suspension spring against the compressive load. The resulting unsteadiness can cause discomfort or a sense of uneasiness among the vehicle's passengers.

It would be desirable, therefore, to devise a new shock absorber assembly that would alleviate the problems noted above by providing a shock absorber in which the suspension spring bearing is fixed firmly against movement or vibration with respect to the cylinder.

### Summary of the Invention

Novel shock absorber assemblies have been devised to achieve the purpose mentioned above. One embodiment of the shock absorber assembly includes a cylinder, a suspension spring bearing on the cylinder, and a suspension spring. The suspension spring bearing contacts and holds a bottom end of a suspension spring, and the suspension spring bearing includes a cylindrical shaped main body that covers one end of the cylinder; an annular spring bearing part formed on a periphery of the main body, a plurality of upper salients that project inwardly from the main body and that are evenly spaced around the main body's circumference to bear against the outside of the cylinder, and a plurality of lower salients that project inwardly from the main body and that are evenly spaced around the main body's circumference to bear against the outside of the cylinder at locations below those of the upper salients.

In this embodiment, the upper and lower salients, which are formed on the upper part and the lower part of the main body, respectively, prevent the suspension spring bearing from moving or vibrating with respect to the cylinder. The suspension spring bearing thus does not move or shake even if it receives a lateral force generated by bowing of the suspension spring, and the bearing is thus fixed firmly on the cylinder.

As a result, when the shock absorber contracts the force generated in shock absorber as a whole maintains more nearly constant, and the passengers therefore do not experience the discomfort or uneasiness that they might have previously, and the ride quality of the vehicle is thereby improved.

In addition, because it is not necessary to roll swage or weld the main body of the suspension spring bearing, the cylinder does not suffer distortion, and smooth vertical movement of the piston inserted in the cylinder is thereby maintained.

### Descriptions of the Drawings

The explanation of this invention is set forth below, based on an embodiment illustrated in the attached figures, in which:
Figure 1 is a side-view of a shock absorber according to one embodiment of this invention;
Figure 2 is a longitudinal sectional view of a suspension of the shock absorber according to one embodiment of this invention;
Figure 3 is a cross-sectional view of a suspension spring bearing of the shock absorber according to one embodiment of this invention; and
Figure 4 is a side-view of a conventional shock absorber.

### Detailed Description of Particular Embodiments

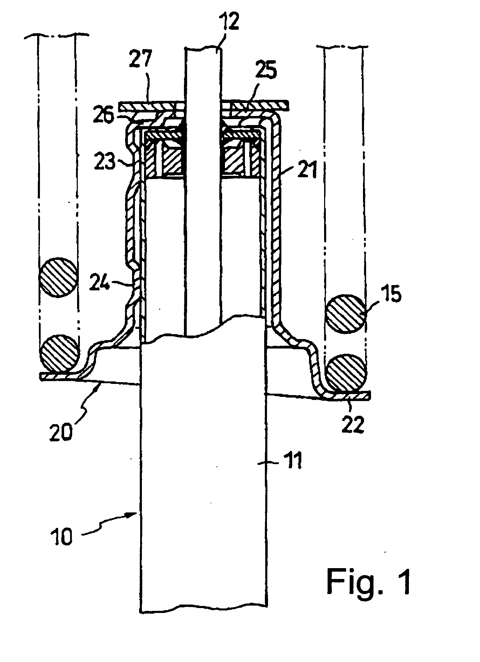

In one embodiment of the invention, a shock absorber assembly includes a shock absorber 10 and a suspension spring bearing 20 as shown in Fig. 1. The shock absorber 10 comprises a cylinder 11, a free piston (not shown) that forms a working chamber (not shown) and an air chamber (not shown) inside the cylinder 11. A piston (not shown) divides the working chamber into two oil chambers (not shown), with a piston rod 12 connected to the piston. A shock absorber of this configuration is referred to as a single cylinder hydraulic shock absorber.

In a single cylinder hydraulic shock absorber of this type, the piston is formed with a passage connecting the two oil chambers, and a damping force generating element such as an orifice or a damping valve is mounted in the passage. The shock absorber thus generates a damping force due to the pressure difference between the two oil chambers, this difference being generated by the damping force generating element when the oil flows between the oil chambers as the shock absorber expands and contracts, and due to the difference of the pressured area of the piston facing each of the oil chambers. Further explanation is not deemed necessary because configurations of this general type are well known in the art.

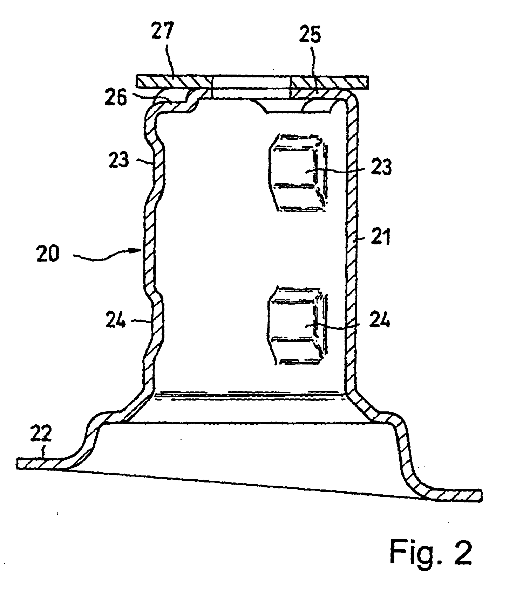

For its part, the suspension spring bearing 20 comprises a cylindrical main body 21, an annular suspension spring bearing part 22 that extends from the bottom end of the main body 21 as shown in Figs 1 and 2, three upper salients 23 that project inwardly from the main body 21, and which are spaced at even intervals around the circumference of the main body. Three additional lower salients 24 project inwardly from the main body 21, and are spaced at even intervals around the circumference of the main body at locations on the main body 21 that are below those of the upper salients 23. The overall suspension spring bearing 20 is formed in a roughly hat-like shape.

The open upper end of the main body 21 is bent inward horizontally to form a horizontal part 25. Three depressions 26 are formed spaced apart around the periphery of the horizontal part 25, and a doughnut-shaped bump stopper 27 is attached to the surface of the horizontal part 25 by welding.

The suspension spring bearing 20 is mounted so that the bearing covers the upper end of the cylinder 11 of the shock absorber 10 in Fig. 1, and a piston rod 12 is passed through the axis core part of the horizontal part 25 and the bump stopper 27. The upper end of the cylinder 11 is inserted in the main body 21 so that the upper end of the cylinder 11 abuts with the bottom ends of the depressions 26 inside the suspension spring bearing 20.

Each of the upper salients 23 is formed so that the diameter of an imaginary circle V, which passes through the inner edge of each upper salient 23, is slightly smaller than the peripheral diameter of the cylinder 11, as shown in Fig.3.

Thus, when the upper end of the cylinder 11 is inserted into the main body 21 of the suspension spring bearing 20 as described above, each of the upper salients 23 presses against the outside of the cylinder 11, and the cylinder is thus held firmly inside the suspension spring bearing 20.

In addition, each of the lower salients 24 is formed so that the diameter of an imaginary circle that passes through the inner edge of each lower salient 24 is slightly smaller than the peripheral diameter of the cylinder, and each of the lower salients 24 thus presses against the outside of the cylinder 11 to hold it securely in the same way as is the case with the upper salients 23.

The suspension spring bearing 20 is thus mounted on the periphery of the upper end of the cylinder 11 so that the upper salients 23 and the lower salients 24, which are formed on the upper and the lower part of the main body, respectively, hold the periphery of the cylinder 11 firmly. This prevents the suspension spring bearing 20 from moving or being shaken in a direction perpendicular to the long axis of the cylinder 11 shown in Fig. 1.

After the suspension spring bearing 20 is mounted on the cylinder 11 as described above, a suspension spring 15 is placed between an upper suspension bearing (not shown) at the upper end of the piston rod 12, and the suspension spring bearing part 21 of the suspension spring bearing 20.

In addition, a bump cushion (not shown) is provided on the periphery of the upper end of the piston rod 12. When the shock absorber contracts, the bump cushion abuts with a bump stopper 27 to cushion the shock when it is compressed to its maximum extent.

In the shock absorber assembly described above, when the shock absorber contracts the suspension spring is compressed, and the suspension spring 15 may be bent in a direction perpendicular to the direction of compression. This results in "bowing" of the spring, because it is difficult to manufacture coiled wire for suspension springs with precisely equal properties across the whole wire.

This bowing of the suspension spring applies a lateral force to the suspension spring bearing 20 that contacts the bottom end of the suspension spring 15.

However, the upper salients 23 and the lower salients 24 formed on the upper part and the lower part of the main body 21, respectively, prevent the suspension spring bearing 20 from moving or shaking in relation to the cylinder 11. The suspension spring bearing 20 thus does not move or shake even when the lateral force is applied, and the suspension spring bearing 20 thereby remains fixed firmly and unmoving with respect to the cylinder 11.

When the shock absorber is compressed, the force generated over the whole shock absorber assembly thus remains constant, and the vehicles passengers therefore do not feel the discomfort or unease that they might have in prior art assemblies, and the ride quality of the vehicle is thereby improved.

] In addition, because it is not necessary to roll swage or weld across the entire periphery of the main body 21 of the suspending spring bearing 20, the cylinder does not suffer distortion, and the smooth vertical movement of the piston inserted inside the cylinder is thereby assured.

Further, the suspension spring bearing 20 contacts the cylinder 11 only at the upper salients 23, the lower salients 24, and the bottom ends of the depressions 26, with gaps at the other locations between the suspension spring bearing 20 and the cylinder 11.

Therefore, even if dust, water, or the like come in between the suspension spring bearing 20 and the cylinder 11, they are discharged outside of the suspension spring bearing 20 through the gaps, and thus do not deteriorate the surface of the cylinder 11 and the suspension spring bearing 20, which might otherwise result from dust, water, or the like trapped between the parts of the assembly.

Further, in the above described embodiment, because three upper salients 23 and three lower salients 24 are formed at even intervals, they can prevent the suspension spring bearing 20 from shaking in relation to the cylinder 11 regardless of the direction of the bowing of the suspension spring 15. It is possible, however, to achieve the same effect even if more than three of the upper salients 23 or the lower salients, which are formed at even intervals, are provided. Further, if the direction of the bowing of the suspension spring 15 is always the same, it is possible to prevent the suspension spring 20 from shaking in relation to the cylinder 11 by forming two upper salients 23 and two lower salients 24 in the direction of bowing.

In addition, a width in the circumferential direction, a width in the axial direction, and the contact pressure of the individual upper salients 23 and lower salients 24 against the periphery of the cylinder 11 may be set depending on the magnitude of the lateral force generated by the bowing, i.e., depending on the characteristics of the suspension spring 15.

An exemplary shock absorber assembly embodying this invention has been explained above.

## Claims

1. A shock absorber (10) comprising:
a cylinder (11); and
a suspension spring bearing (20) on the cylinder (11);
wherein said suspension spring bearing (20) is configured to contact the bottom end of a suspension spring (15), and
wherein said suspension spring bearing (20) comprises:
a cylindrical shaped main body (21) covering an upper end of said cylinder (11);
an annular spring bearing part (22) formed on a periphery of said main body (21); and
a plurality of sailents projecting inwardly from said main body (21),
the shock absorber **characterized by** said suspension spring bearing (20) comprising:
a plurality of upper salients (23) projecting inwardly from said main body (21) and spaced apart from one another around a circumferential direction of the main body (21) at even intervals, said upper salients bearing against the outside of said cylinder (11); and
a plurality of lower salients (24) projecting inwardly from said main body (21) and spaced apart from one another around a circumferential direction of the main body (21) at even intervals, wherein said lower salients (24) are located at a part of said main body (21) that is lower than said upper salients (23), and wherein said lower salients (24) bear against the outside of said cylinder (11).

## Patentansprüche

1. Stoßdämpfer (10), umfassend:
einen Zylinder (11); und
ein Tragfederlager (20) auf dem Zylinder (11);
wobei das Tragfederlager (20) eingerichtet ist, in Kontakt mit dem unteren Ende einer Tragfeder (15) zu stehen, und
wobei das Tragfederlager (20) umfasst:
einen zylinderförmigen Hauptkörper (21) der ein oberes Ende des Zylinders (11) bedeckt;
einen ringförmigen Federlagerteil (22), der an einem Rand des Hauptkörpers (21) gebildet ist; und
eine Vielzahl von Ausbuchtungen die vom Hauptkörper (21) nach Innen ragen,
wobei der Dämpfer **dadurch gekennzeichnet ist, dass**
das Tragfederlager (20) umfasst:
eine Vielzahl von oberen Ausbuchtungen (23), die vom Hauptkörper (21) nach Innen ragen und voneinander um eine Umfangsrichtung des Hauptkörpers (21) herum in gleichförmigen Intervallen beabstandet sind, wobei die oberen Ausbuchtungen gegen die Außenseite des Zylinders (11) anliegen; und
eine Vielzahl von unteren Ausbuchtungen (24), die vom Hauptkörper (21) nach Innen ragen und voneinander um eine Umfangsrichtung des Hauptkörpers (21) herum in gleichförmigen Intervallen beabstandet sind, wobei die unteren Ausbuchtungen (24) in einem Bereich des Hauptkörpers (21) platziert sind, der unterhalb der oberen Ausbuchtungen (23) liegt, und wobei die unteren Ausbuchtungen (24) gegen die Außenseite des Zylinders (11) anliegen.

## Revendications

1. Amortisseur de choc (10) comprenant :
un cylindre (11) ; et
un palier de ressort de suspension (20) sur le cylindre (11);
dans lequel ledit palier de ressort de suspension (20) est configuré pour venir en contact avec l'extrémité inférieure d'un ressort de suspension (15), et
dans lequel ledit palier de ressort de suspension (20) comprend :
un corps principal de forme cylindrique (21) recouvrant une extrémité supérieure dudit cylindre (11) ;
une partie de palier de ressort annulaire (22) formée sur une périphérie dudit corps principal (21) ; et
une pluralité de saillies faisant saillie vers l'intérieur à partir dudit corps principal (21),
l'amortisseur de choc étant **caractérisé par** ledit palier de ressort de suspension (20) qui comprend :
une pluralité de saillies supérieures (23) faisant saillie vers l'intérieur à partir dudit corps principal (21) et espacées les unes des autres autour d'une direction circonférentielle du corps principal (21) à intervalles réguliers, lesdites saillies supérieures s'appuyant contre l'extérieur dudit cylindre (11) ; et
une pluralité de saillies inférieures (24) faisant saillie vers l'intérieur à partir dudit corps principal (21) et espacées les unes des autres autour d'une direction circonférentielle du corps principal (21) à intervalles réguliers, dans lequel lesdites saillies inférieures (24) sont situées au niveau d'une partie dudit corps principal (21) qui est inférieur auxdites saillies supérieures (23), et dans lequel lesdites saillies inférieures (24) s'appuient contre l'extérieur dudit cylindre (11).
